**Europäisches Patentamt**

**European Patent Office**

**Office européen des brevets**

(11) Publication number: **0 123 789**
**B1**

(12) **EUROPEAN PATENT SPECIFICATION**

(45) Date of publication of patent specification: **06.06.90**　　(51) Int. Cl.⁵: **A 23 G 9/12**

(21) Application number: **84100797.4**

(22) Date of filing: **26.01.84**

(54) Ice-cream machine.

(30) Priority: **08.02.83 IT 1510983 u**

(43) Date of publication of application:
**07.11.84 Bulletin 84/45**

(45) Publication of the grant of the patent:
**06.06.90 Bulletin 90/23**

(84) Designated Contracting States:
**AT BE CH DE FR GB LI LU NL SE**

(56) References cited:
**DE-A-3 000 882**
**DE-A-3 003 947**
**FR-A-2 226 629**
**FR-A-2 551 191**
**US-A-2 243 317**
**US-A-2 909 433**

(73) Proprietor: **Carpigiani S.r.L.**
**45, Via Emilia**
**I-40011 Anzola Emilia, Bologna (IT)**

(72) Inventor: **Manfroni, Ezio**
**56, Via Altopiano**
**I-40037 Sasso Marconi-Bologna (IT)**

(74) Representative: **Porsia, Attilio, Dr. et al**
**c/o Succ. Ing. Fischetti & Weber Via Caffaro 3/2**
**I-16124 Genova (IT)**

Courier Press, Leamington Spa, England.

EP 0 123 789 B1

## Description

This invention relates to the ice-cream machines, and more particularly to the ice-cream machines for the batchwise production of ice-cream.

From FR—A—2 551 191 an ice cream machine is known comprising a horizontal axis freezing cylinder having mounted concentrically therein a rotary mixer having a motor-driven driving shaft. The freezing cylinder is closed at both ends, and the closure door at its front end is provided with a opening at its lowest end for discharging the produced ice-cream, which opening may be closed by means of a suitable closure member. The said closure door is further provided near its upper end with a loading hopper extending upwardly from the center region of the closure door. This loading hopper communicates, at the bottom thereof, with the interior of the freezing cylinder through a suitable feed port.

The introduction of the liquid mixture into the freezing cylinder through the loading hopper and the associated feed port, which is located as close as possible to the axis of the cylinder to avoid the effect of centrifugal force, gives rise to problems in order to expel the air from said cylinder.

The obvious solution of the above problem would be to provide one vent opening at the upper portion of the cylinder in order to bleed the air trapped in the cylinder while same is being filled with the liquid ice-cream mixture. However the said solution is unpractical since it would be necessary to close said opening during the ice-cream producing step, in order to prevent the liquid from escaping from the cylinder or the produced ice cream from obstructing said opening.

Accordingly in the prior art devices in order to enable the liquid mixture to flow as easily and as quickly as possible through the loading hopper and the associated feed port into the freezing cylinder of the ice-cream machine, the feed port is usually made somewhat large. The above feature however entrains the requirement that, in order to avoid that during the ice-cream production anyone may inadvertently introduce a hand through said port with resulting risk of accident, a protection grid must be provided at the mouth of the hopper, which increases the manufacturing costs and hinders a thorough washing of the hopper and of the associated port.

Moreover, the presence of a feed port of large diameter results in the possibility of ice-cream and mixture backups into the hopper, which is to be avoided.

It is therefore the main object of this invention to overcome these and other drawbacks and disadvantages of the prior art ice-cream making machines of the kind described above.

According to a characteristic feature of the invention, this object is achieved by providing in the upper portion of the closure door of the freezing cylinder of the ice-cream machine in close proximity of the upper end of the loading hopper, a communication or bleed port communicating with the upper zone of the freezing cylinder, which permits the air in the cylinder to escape easily and quickly while said cylinder is being filled.

Therefore, the diameter of the loading port may be reduced, thus avoiding the disadvantages related to the use of large openings.

Moreover, in order to close said bleed port while the ice-cream is being produced, the hopper is provided with a closure lid, hinged at the top edge of the latter, which in turn is provided with a closing pin which when said lid is being closed enters the bleed port and closes it completely.

These and other characteristics and advantages of this invention will be apparent from the following description of a preferred embodiment thereof, made with reference to the accompanying drawing, wherein:

Figure 1 is a diagrammatic longitudinal sectional view of a freezing cylinder and parts associated therewith, of an ice-cream making machine according to the invention, in a position for loading the liquid mixture into the freezing cylinder, with the lid of the hopper in a raised position;

Figure 2 is a diagrammatic view corresponding to figure 1, in the operative position of the machine, with the lid of the hopper in the closed position and with the closing pin in the position for closing the bleed port.

With reference to the drawing, the numeral 1 indicates the freezing cylinder of a machine for the production of ice-cream batches. This cylinder is of the horizontal axis type and is closed at the back thereof by a rear wall 201. A rotary mixer is arranged in the cylinder 1 and it comprises a set of stirring-scraping blades 2 connected to a central shaft 4 by spokes 3. One end of the shaft 4 protrudes out of the cylinder 1 through a hole in the rear wall 201 and is connected through a belt-and-pulley drive (not shown) to a suitable actuating motor (not shown. The outer wall of the cylinder 1 is surrounded, in a conventional manner, by the evaporator (not shown) of a suitable refrigerating unit.

The front end of the cylinder 1 is closed by a door 5 which is provided at the lower portion thereof with a discharge opening 6 which is closed by a gate shutter 7, and at the upper portion thereof with a hopper 8 which is provided at the bottom with an opening 9 communicating with the cylinder 1 and is closed by a lid 10 which is hinged at 105 to said closing door 5.

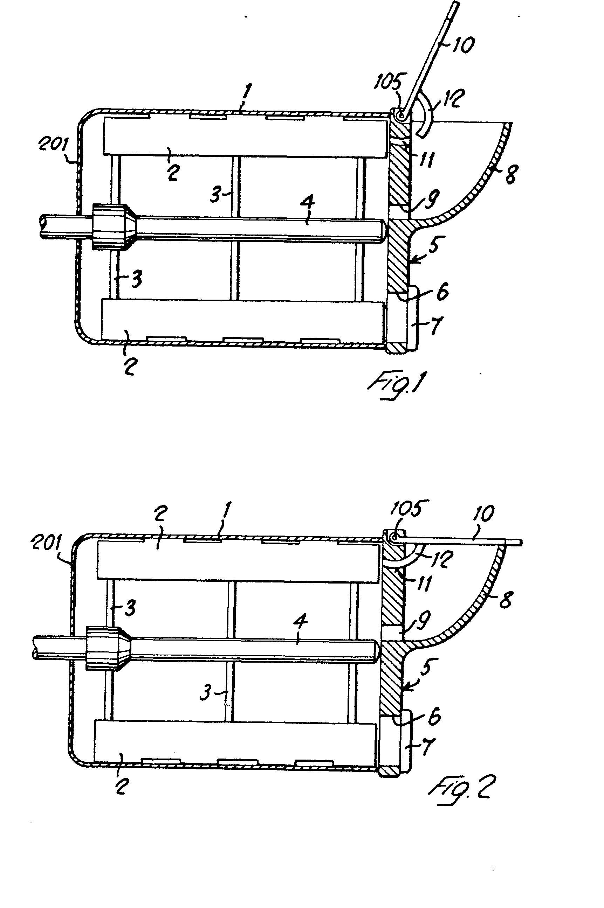

The upper portion of the door 5, close to the top wall of the cylinder 1, is formed with a through hole 11 that can be closed by a closing member 12 which is secured to the undersurface of the lid 10. The closing member 12 is of arcuate shape, and the hole 11 is of corresponding shape, so that the closing member can be easily inserted thereinto and disinserted therefrom upon closing and opening, respectively, the lid 10. The closing member 12 extends through an arc of circumference smaller than 180, whereby when the lid 10 is opened the closing member 12 will be completely out of engagement with the hole 11, as shown in figure 1.

The operation of the device described above is now apparent. When the lid 10 is opened to load the liquid mixture into the cylinder 1, the air-bleed hole 11 is automatically opened, whereby the liquid mixture being poured into the hopper 8 will freely flow through the opening 9 into the cylinder 1, with no backup or backpressure, which permits the use of a reduced opening 9 such as to eliminate the use of a grid at the opening mouth of the hopper 8.

After loading the liquid mixture, the lid 10 will be closed (position of figure 2) and, consequently, the closing member 12 will close the bleed-hole 11. Advantageously, the closing member 12 extends, when in the closed position, over the entire length of the hole 11, so as to avoid that any deposit or plug of ice-cream may be retained therein.

## Claims

1. An ice-cream machine for the batchwise production of ice-cream, comprising a horizontal axis freezing cylinder (1); an evaporator of a refrigerating unit in heat exchange relationship with the said freezing cylinder; a rotary mixer (2—3) inside said cylinder (1); means for rotating said mixer; said cylinder (1) being provided with a rear wall (201) at an end thereof and being closed at the other end thereof by a suitable door (5); an ice-cream discharge opening (6) in the bottom end of said door (5); means (7) to open and close said opening (6); and a hopper (8) located at the upper portion of said door (5) and communicating at its bottom with the interior of said freezing cylinder through a feed port (9) characterized by the fact that said closing door (5) is provided near the upper edge of the loading hopper (8) with a through bleed-hole (11) communicating with the head or upper portion of said freezing cylinder (1), and the said loading hopper (8) is provided with a closing lid (10) hinged to said door (5) said lid (10) of the loading hopper being provided with a protruding closing member (12) adapted to penetrate into said bleed-hole (11) when the lid (10) is closed, and to withdraw from said hole (11) when said lid (10) is opened.

2. A machine according to claim 1, in which said bleed-hole (11) has an arcuate profile, and said closing member (12) has a corresponding shape.

## Patentansprüche

1. Speiseeismaschine für die chargenweise Herstellung von Speiseeis, mit einem eine horizontale Achse aufweisenden Gefrierzylinder (1), einem in wärmetauschender Zuordnung zu diesem Gefrierzylinder vorgesehenen Verdampfer einer Kühleinheit, einem drehbaren Mischer (2—3) innerhalb dieses Zylinders (1) und Einrichtungen für den Drehantrieb dieses Mischers, wobei der Zylinder an dem einen Ende mit einer Rückwand (201) versehen und am anderen Ende durch eine geeignete Tür (5) verschlossen ist, eine Speiseeisausgabeöffnung (6) im unteren Endbereich dieser Tür (5) und Mittel (7) zum Öffnen und Schließen dieser Öffnung (6) vorgesehen sind und ein Trichter (8) im oberen Bereich der Tür (5) angebracht ist, der an seinem Boden mit dem Innenraum des Gefrierzylinders über eine Füllöffnung (9) in Verbindung steht, dadurch gekennzeichnet, daß die Verschlußtür (5) in der Nähe des oberen Randes des Fülltrichters (8) mit einer Lecköffnung (11) versehen ist, die mit dem Kopf oder dem oberen Bereich des Gefrierzylinders (1) in Verbindung steht und daß der Fülltrichter (8) mit einem Verschlußdeckel (10) versehen ist, der an der Tür (5) schwenkbar lagert und mit einem vorstehenden Verschlußteil (12) versehen ist, der bei geschlossenem Deckel (10) in die Lecköffnung (11) eindringt und beim Öffnen des Deckels (10) aus der Öffnung (11) zurückgezogen wird.

2. Maschine nach Anspruch 1, bei der die Lecköffnung (11) ein bogenförmiges Profil aufweist und der Verschlußteil (12) eine entsprechende Form besitzt.

## Revendications

1. Une machine à crème glacée pour la production de crème glacée ne en mode discontinu, comprenant un cylindre de congélation à axe horizontal (1); un évaporateur d'un appareil de réfrigération placé en relation d'échange de chaleur avec le cylindre de congélation, un mixeur rotatif (2—3) à 5 l'intérieur du cylindre (1); des moyens pour faire tourner le mixeur; le cylindre (1) comportant à une extrémité une paroi arrière (201), et étant fermé à l'autre extrémité par une porte appropriée (5); une ouverture d'évacuation de crème glacée (6) à l'extrémité inférieure de la porte (5); des moyens (7) pour ouvrir et fermer l'ouverture précitée (6); et une trémie 10 (8) qui se trouve dans la partie supérieure de la porte (5) et dont la partie inférieure communique avec l'intérieur du cylindre de réfrigération par l'intermédiaire d'un orifice d'alimentation (9), caractérisée par le fait que la porte de fermeture (50) comporte, près du bord supérieur de la trémie de chargement (8), un trou d'échappement d'air (11) qui communique avec la partie supérieure du cylindre de congélation (11), et par le fait que la trémie de chargement (8) est équipée d'un couvercle de fermeture (10) qui est articulé sur la porte (5), ce couvercle (10) de la trémie de chargement comportant un élément d'obturation en saillie (12) qui est conçu pour pénétrer dans le trou d'échappement d'air (11) lorsque le couvercle (10) est fermé, et pour sortir de ce trou (11) lorsque le couvercle (10) est ouvert.

2. Une machine selon la revendication 1, dans laquelle le trou d'échappement d'air (11) a un profil courbe, et l'élément d'obturation (12) a une forme correspondante.

Fig.1

Fig.2